# EUROPEAN PATENT APPLICATION

(11) **EP 4 467 904 A1**
(43) Date of publication of application: **27.11.2024**
(21) Application number: 24172834.4
(22) Date of filing: 26.04.2024
(51) Int. Cl.: F25B 47/02, F25B 49/02, B60H 1/00

(54) **TRANSPORT REFRIGERATION UNIT AND REFRIGERATION CIRCUIT WITH REFRIGERANT-BASED DEFROST CONTROL AND A METHOD THEREOF**

(30) Priority: 28.04.2023 US 202363498843 P
(71) Applicant: Carrier Corporation, Palm Beach Gardens, FL 33418 (US)
(72) Inventor: SENF, Jr, Ray, Central Square, NY (US)
(74) Representative: Dehns

(57) **Abstract**

A transport refrigeration unit (TRU) is disclosed. The TRU comprises a sensor (116) positioned at an outlet of an evaporator (108) associated with the TRU. The sensor (116) is operable to sense temperature of a refrigerant exiting evaporator coils of the evaporator (108), wherein the TRU is configured to terminate defrosting of the evaporator (108) when the sensed temperature exceeds a first predefined temperature indicative of a phase change or melting of ice formed on the evaporator coils.

## Description

### BACKGROUND

This invention relates to transport refrigeration units, and more particularly, to a transport refrigerant unit and a refrigeration circuit with refrigerant based defrost control, and a method thereof.

Refrigeration systems and transport refrigeration units (TRU) may involve a refrigerant-based hot gas cycle defrost control system that may rely on the tube-sheet temperature of the evaporator to terminate the defrost cycle. However, the existing defrost control systems and methods may be ineffective at sensing the defrost termination in the evaporator, which may end the defrost cycle much sooner or force the defrost to be longer than necessary, thereby affecting the overall operation and efficiency of the refrigerant systems or TRUs.

### SUMMARY

Viewed from one aspect there is provided a transport refrigeration unit (TRU). The TRU comprises a sensor positioned at an outlet of an evaporator associated with the TRU, the sensor is operable to sense temperature of a refrigerant exiting evaporator coils of the evaporator, wherein the TRU is configured to terminate defrosting of the evaporator when the sensed temperature exceeds a first predefined temperature indicative of a phase change of ice formed on the evaporator coils.

In one or more embodiments, the TRU comprises a compressor; a condenser downstream of the compressor; an expansion device downstream of the condenser; and an evaporator downstream of the expansion device, wherein, in a cooling mode, the TRU is configured to circulate the refrigerant from the compressor to the condenser, through the expansion device and the evaporator, and then return to the compressor.

In one or more embodiments, in a defrost mode, the TRU is configured to circulate hot refrigerant from the compressor to the evaporator to enable defrosting of the evaporator coils.

In one or more embodiments, in the defrost mode, the TRU is configured to circulate the hot refrigerant from the compressor to the evaporator through a drain pan heater associated with the evaporator to enable defrosting of the drain pan and the evaporator coils.

In one or more embodiments, the compressor is fluidically connected to the condenser, and the drain pan heater and/or the evaporator coils associated with the evaporator by a three-way valve.

In one or more embodiments, the TRU is switched from the defrost mode to the cooling mode when the temperature of the refrigerant exiting the evaporator coils of the evaporator exceeds the first predefined temperature.

In one or more embodiments, the expansion device is an electronic evaporator expansion valve fluidically configured between the compressor and the evaporator.

Viewed from another aspect there is provided a method for controlling defrosting in a refrigeration system. The method comprising the steps of: monitoring, by a sensor positioned at an outlet of an evaporator associated with the refrigeration system, temperature of a refrigerant exiting evaporator coils of the evaporator; and terminating defrosting of the evaporator when the sensed temperature exceeds a first predefined temperature indicative of a phase change of ice formed on the evaporator coils.

In one or more embodiments, the method comprises the steps of switching the refrigeration system from a defrost mode to a cooling mode when the temperature of the refrigerant exiting the evaporator coils of the evaporator exceeds the first predefined temperature.

In one or more embodiments, in the defrost mode, the method comprises the step of circulating hot refrigerant from a compressor of the refrigeration system to the evaporator to enable defrosting of the evaporator coils.

In one or more embodiments, in the defrost mode, the method comprises the step of circulating the hot refrigerant from the compressor to the evaporator through a drain pan heater associated with the evaporator to enable defrosting of the drain pan and the evaporator coils.

In one or more embodiments, in the cooling mode, the method comprises the step of circulating the refrigerant from the compressor to the condenser, through an expansion device and the evaporator, and then returning to the compressor.

Viewed from another aspect there is provided a refrigeration circuit with refrigerant based defrost control. The refrigeration circuit comprises a compressor; a condenser downstream of the compressor; an expansion device downstream of the condenser; an evaporator downstream of the expansion device; and a sensor positioned at an outlet of the evaporator and operable to sense temperature of a refrigerant exiting the evaporator coils of the evaporator; wherein an outlet of the compressor is fluidically connected to the condenser, and evaporator coils associated with the evaporator, and wherein the refrigeration circuit is configured to terminate defrosting of the evaporator when the sensed temperature exceeds a first predefined temperature indicative of a phase change of ice formed on the evaporator coils.

In one or more embodiments, in a defrost mode, the refrigeration circuit is configured to circulate the hot refrigerant from the compressor to the evaporator through a drain pan heater associated with the evaporator to enable defrosting of the drain pan and the evaporator coils.

In one or more embodiments, the compressor is fluidically connected to the condenser, and the drain pan heater and/or the evaporator coils associated with the evaporator by a three-way valve.

In one or more embodiments, the refrigeration circuit comprises an electric heater in thermal contact with the evaporator, wherein in a defrost mode, the electrical heater is activated to enable defrosting of the evaporator coils and a drain pan associated with the evaporator.

In one or more embodiments, the refrigeration circuit comprises an economizer fluidically configured between the compressor, the evaporator, and the condenser, and wherein the expansion device is an electronic evaporator expansion valve.

The foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

### BRIEF DESCRIPTION OF THE DRAWINGS

The accompanying drawings are included to provide a further understanding of the subject disclosure and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label. Certain exemplary embodiments will now be described in greater detail by way of example only and with reference to the accompanying drawings in which:
FIG. 1 illustrates an exemplary representation of a refrigeration circuit associated with a transport refrigeration unit (TRU) or a refrigeration system.
FIG. 2 illustrates an exemplary block diagram of a defrost control system implemented in the refrigeration circuit of FIG. 1.

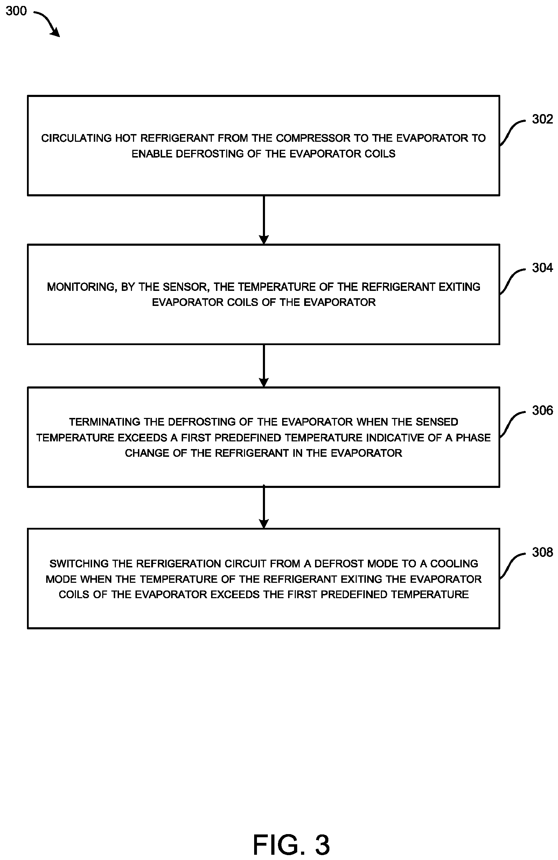

FIG. 3 illustrates an exemplary flow diagram of a method for controlling a defrost operation in a TRU or refrigeration system.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

Refrigeration systems or transport refrigeration units (TRU) may involve a refrigerant-based hot gas cycle defrost control system where a hot refrigerant from a compressor may be supplied to the evaporator to enable defrosting of the evaporator coils. The defrost control system of the previous refrigeration system typically involves a thermistor attached to the evaporator coil body or a support bracket of the evaporator to check the tube-sheet temperature of the evaporator and accordingly terminate the defrost cycle. However, the use of a thermistor on the coil body or support bracket of the evaporator to check tube-sheet temperature may not be an accurate or effective indication of defrost termination. As a result, the defrost control system may end the defrost cycle much sooner or force the defrost to be longer than necessary, which may underheat or overheat the evaporator coils, thereby affecting the overall operation and efficiency of the refrigerant systems. Moreover, the existing refrigeration systems or defrost control systems have the limitation of monitoring tube-sheet temperature up to a few coils only and they fail to consider and monitor the composite temperature of all fluid channels associated with the evaporator coils which may be a better indication of defrosting status or defrost termination. There is, therefore, a need for implementing an improved, reliable, and efficient defrost solution in existing refrigeration systems or TRUs.

This invention overcomes the above-mentioned drawbacks, and limitations associated with the existing defrosting solutions being implemented in refrigeration systems or TRUs, by providing a simple, efficient, reliable, and cost-effective solution that may involve the existing evaporator leaving thermistor (EVOT) of the refrigeration system or TRU to monitor/sense the composite temperature of all fluid channels associated with the evaporator coils which is a more responsive indication of bulk coil temperature of the evaporator to terminate or control the defrosting operation, which was not possible in the existing solutions. This solution may help prevent overheating or underheating of evaporator coils and enable quick and efficient switching of the evaporator between a defrosting mode and a cooling mode.

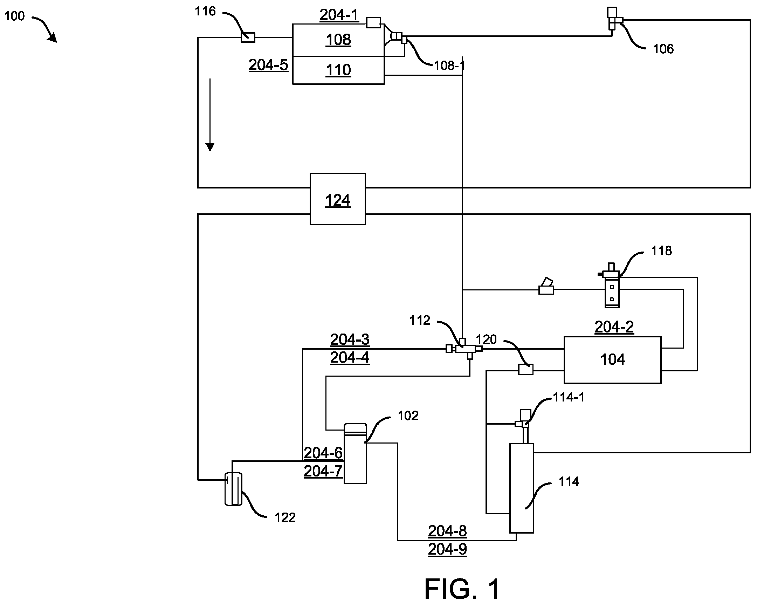

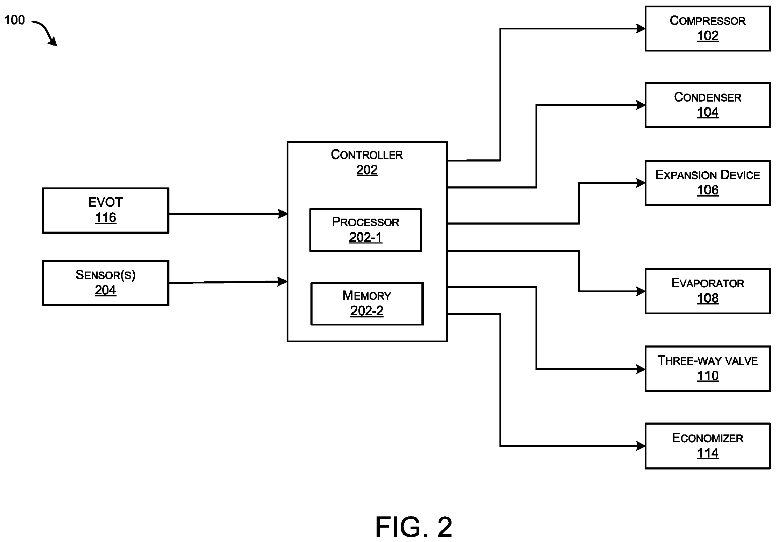

Referring to FIGs. 1 and 2, the refrigeration circuit 100 associated with a refrigeration system or a transport refrigeration unit (TRU) is disclosed, which is configured with a refrigerant-based hot gas cycle defrost system. The refrigeration circuit 100 may include a compressor 102, a condenser 104 configured downstream of the compressor 102, an expansion device 106 configured downstream of the condenser 104, and an evaporator 108 configured downstream of the expansion device 106. In addition, an outlet of the compressor 102 may be fluidically connected to the condenser 104, as well as the evaporator coils associated with the evaporator 108. Further, in one or more embodiments, a drain pan associated with the evaporator 108 may be equipped with a drain pan heater 110 that may also be fluidically connected to the outlet of the compressor 102 such that the compressor 102 may circulate refrigerant either directly to the evaporator coils of the evaporator 108 or through the drain pan heater 110. The compressor 102 may be fluidically connected to the condenser 104, the drain pan heater, and/or the evaporator coils associated with the evaporator by a three-way valve 112.

The refrigeration circuit 100 or the defrost system associated with the refrigeration system or TRU may include a sensor 116 that may be positioned at a refrigerant outlet of the evaporator 108. The sensor 116 may be operable to sense the temperature of the refrigerant exiting the evaporator coils of the evaporator 108. In one or more embodiments, the sensor 116 may be an evaporator 108 outlet temperature sensor (EVOT) that is already installed in the refrigeration circuit 100, however, the sensor 116 may also be additionally installed at the outlet of the evaporator 108 in existing refrigeration circuit 100. It is to be appreciated by a person skilled in the art that the refrigerant exiting the outlet of the evaporator coils is a composite temperature of all fluid channels associated with the evaporator coils which may be a more responsive indication of the bulk coil temperature of the evaporator 108. The temperature sensed by the sensor at the outlet of the evaporator 108 may be an accurate and responsive indication of the physical state of the ice formed on the evaporator coils (i.e, the ice to be in a defrosted state or a frozen state or a mixed state therebetween, which may facilitate in effective and reliable defrosting and cooling operation in the evaporator 108.

In one or more embodiments, in a defrost mode or during a defrost cycle, the refrigeration circuit 100 may be configured to circulate hot refrigerant from the outlet of the compressor 102 to the evaporator coils directly or via the drain pan heater 110 to enable defrosting of the evaporator coils and/or the drain pan of the evaporator 108. The hot refrigerant may be supplied through a distributor 108-1 associated with the evaporator 108 such that hot refrigerant may be effectively distributed among the evaporator coils. During the defrost mode, the sensor 116 may continuously monitor the evaporator 108 outlet temperature. The refrigeration circuit 100 may terminate the defrosting of the evaporator 108 when the temperature at the outlet of the evaporator coils exceeds a first predefined temperature indicative of a phase change or melting of ice formed on the evaporator coils or complete defrosting of the evaporator coils. Further, the refrigeration circuit 100 may be switched from the defrost mode to a cooling mode when the temperature of the refrigerant exiting the evaporator coils of the evaporator 108 exceeds the first predefined temperature.

In one or more embodiments, in the cooling mode or cooling cycle, the refrigeration circuit 100 may restrict the supply of hot refrigerant from the outlet of the compressor 102 to the evaporator coils and further circulate the refrigerant from the compressor 102 to the condenser 104, through the expansion device 106 and the evaporator 108, and then return to the compressor 102. The detailed operation of the refrigeration circuit 100 in the cooling mode has been described in subsequent paragraphs.

In one or more embodiments, the compressor 102 may be a scroll compressor 102; however, other compressors such as reciprocating or screw compressors are possible without limiting the scope of the disclosure. A motor (not shown) may be used to drive the compressor 102. For example, a motor can be an integrated electric drive motor driven by a synchronous generator, a commercial power service an external power generation system (e.g., shipboard), a generator or the like. The compressor 102 may also be a multi-stage compression device.

In one or more embodiments, during a cooling cycle or cooling mode, high-temperature, high-pressure refrigerant vapor exiting the outlet of the compressor 102 may move to the condenser 104 that may include a plurality of condenser coils, which may receive air blown by a condenser fan. The condenser 104 may facilitate heat exchange between the refrigerant flowing within the condenser 104 coils and the received air to remove latent heat through the condenser 104, which may condense the refrigerant to a high-pressure/high-temperature liquid within the condenser coils. The high-pressure/high-temperature liquid refrigerant may flow to a receiver 118 that may provide storage for excess liquid refrigerant during low-temperature operations. Further, from the receiver 118, the refrigerant may flow to a filter drier 120 that may keep the refrigerant clean and dry.

The refrigeration circuit 100 may further include an economizer 114 fluidically configured between the compressor 102, the receiver 118, the evaporator 108, and the condenser 104. In one or more embodiments, the expansion device 106 may be an electronic evaporator expansion valve (EVXV). The economizer 114 may increase the refrigerant subcooling. When the economizer 114 is active, an injection solenoid valve associated with the economizer 114 may open to allow refrigerant to pass through an auxiliary expansion valve 114-1 having a sensing bulb located upstream of an intermediate inlet port of the compressor 102. The injection solenoid valve may be controlled responsive to the temperature measured at the bulb, and serve to expand and cool the refrigerant that proceeds into an economizer 114 counter-flow heat exchanger that may additionally sub-cool the liquid refrigerant.

The refrigerant may flow from the economizer heat exchanger of the economizer 114 to the electronic evaporator expansion valve (EVXV) 106. As the liquid refrigerant passes through the orifice of the EVXV 106, at least some of the liquid refrigerant may vaporize. The vaporized refrigerant may then enter the evaporator 108 via the distributor and then flow through the evaporator coils of the evaporator 108. The evaporator 108 may absorb heat from the air (e.g., return air returning from a container of TRU or ambient air) to vaporize some or all of the remaining liquid refrigerant in the evaporator 108. The air may preferably be drawn or pushed across the evaporator coils by at least one evaporator fan. The refrigerant vapor may be drawn from the evaporator 108 through a suction service valve back into the compressor 102 via an accumulator 122 that may store any excess refrigerant. Further, a heat exchanger 124 may be additionally configured in the refrigeration circuit 100 to facilitate heat transfer from a warm refrigerant supplied from the condenser 104 or the sub-cooled liquid from the economizer's heat exchanger to the cold refrigerant supplied by the evaporator 108 during the cooling cycle.

The refrigeration circuit 100 may include a controller 202 to control the operation of the refrigeration system or TRU. The controller 202 can include a processor 202-1 coupled to a memory 202-2 storing instructions executable by the processor 202-1 to enable the controller 202 to perform one or more designated operations. The memory 202-2 of the controller 202 can contain predefined values for various operating parameters within the container of the TRU or a space where the refrigeration system is installed. The parameters may include but are not limited to, temperature set points for various locations within the container or the space, pressure limits, current limits, engine speed limits, and any variety of other desired operating parameters or limits with the TRU or refrigeration system.

In one or more embodiments, the controller 202 can be operatively coupled to the sensor (EVOT) 116. During the defrost mode, the controller 202 can enable the compressor 102 to circulate hot refrigerant from the outlet of the compressor 102 to the evaporator coils directly or via the drain pan heater 110 to enable defrosting of the evaporator coils and/or the drain pan of the evaporator 108. The hot refrigerant may be supplied through the distributor 108-1 associated with the evaporator 108 such that hot refrigerant may be effectively distributed among the evaporator coils. The controller 202 may continuously monitor the evaporator 108 outlet temperature via the sensor 116 during the defrost operation. Accordingly, the controller 202 may actuate the compressor 102 to terminate the defrosting of the evaporator 108 when the temperature at the outlet of the evaporator coils exceeds the first predefined temperature indicative of a phase change or melting of ice formed on the evaporator coils or complete defrosting of the evaporator coils. Further, the controller 202 may actuate the components of the refrigeration circuit 100 to switch from the defrost mode to the cooling mode when the temperature of the refrigerant exiting the evaporator coils of the evaporator 108 exceeds the first predefined temperature and operate the refrigeration circuit 100 in the cooling mode as described in the aforementioned paragraphs.

In one or more embodiments, the controller 202 can include a communication module that can operatively couple the controller 202 to components of the refrigeration circuit 100 and enable the controller 202 to receive temperature inputs and pressure inputs from various points in the refrigeration circuit 100, AC inputs, DC inputs, voltage inputs, and humidity level inputs. In addition, the controller 202 can include an actuator, drive circuit, and relays to receive signals or current from the controller 202 and in turn control various external or peripheral devices in the TRU or refrigeration circuit 100.

The refrigeration circuit 100 can further include one or more sensors and/or transducers (collectively designated as 204 in FIG. 2) in communication with the controller 202. Referring back to FIG. 1, The sensors 204 can be a return air temperature (RAT) sensor 204-1 that can monitor the evaporator 108 return air temperature, an ambient air temperature (AAT) sensor 204-2 that can monitor an ambient air temperature value (e.g., read in front of the condenser) associated with the condenser 104, a compressor 102 suction temperature (CST) sensor 204-3 that can monitor compressor 102 suction temperature, and a compressor discharge temperature (CDT) sensor 204-4 that can detect a compressor discharge temperature inside the dome of the compressor 102.

The refrigeration circuit 100 may include the evaporator outlet temperature (EVOT) sensor 116 as described in detail in the above paragraphs, and an evaporator outlet pressure (EVOP) sensor 204-5 that can detect an outlet pressure of the evaporator 108. Further, the sensors 204 can include a compressor suction pressure (CSP) sensor 204-6 that can monitor a compressor suction value of compressor 102, a compressor discharge pressure (CDP) sensor 204-7 that can monitor a compressor 102 discharge value of compressor 102. In addition, the sensors 204 may include an economizer outlet temperature (ECOT) sensor 204-8 and an economizer outlet pressure (ECOP) sensor 204-9 that can detect an outlet pressure of the economizer 114.

In one or more embodiments, the refrigeration circuit 100 may be associated with a TRU where the TRU can be fluidically coupled to an enclosed space within a container, trailer or cargo space of a truck. These spaces will be collectively referred to as a container. The TRU may be configured to maintain a predefined thermal environment within the container. The TRU may be coupled to the front end of the container. Alternatively, the TRU can be coupled to a prescribed position on a side or more than one side of the container. Moreover, a plurality of TRUs can be coupled to a single container. Alternatively, a single TRU can be coupled to a plurality of containers. The TRU can operate to ingress air at a first temperature and to degrees air at a second temperature. In one or more embodiments, the exhaust air from the TRU may be warmer than the received air such that the TRU may be employed to supply warm air in the container. In other embodiments, the exhaust air from the TRU may be cooler than the received air such that the TRU may be employed to supply cool air in the container.

Further described herein is a method 300 for controlling defrosting in a refrigeration system or TRU. The method may involve the refrigeration circuit of FIGs. 1 and 2 where the refrigeration circuit may include a compressor 102, a condenser 104 configured downstream of the compressor 102, an expansion device 106 configured downstream of the condenser 104, and an evaporator 108 configured downstream of the expansion device 106. In addition, an outlet of the compressor 102 may be fluidically connected to the condenser 104, as well as the evaporator coils associated with the evaporator 108. Further, a drain pan associated with the evaporator 108 may be equipped with a drain pan heater 110 that may also be fluidically connected to the outlet of the compressor 102 such that the compressor 102 may circulate refrigerant into the evaporator coils through the drain pan heater 110. The compressor 102 may be fluidically connected to the condenser 104, the drain pan heater 110, and/or the evaporator coils associated with the evaporator 108 by a three-way valve 112.

Method 300 may involve the step of positioning a sensor (EVOT) 116 at a refrigerant outlet of the evaporator 108 associated with the refrigeration circuit 100. In one or more embodiments, during a defrost mode or defrost cycle, method 300 may include step 302 of circulating hot refrigerant from the compressor to the evaporator to enable defrosting of the evaporator coils. In some embodiments, during the defrost mode, step 302 may include circulating the hot refrigerant from the compressor to the evaporator through the drain pan heater associated with the evaporator to enable defrosting of the drain pan as well as the evaporator coils.

Method 300 may further include step 304 of monitoring, by the sensor, the temperature of the refrigerant exiting evaporator coils of the evaporator. Accordingly, when the sensed temperature exceeds a first predefined temperature indicative of a phase change or melting of ice formed on the evaporator coils, method 300 may include the step 306 of terminating the defrosting of the evaporator. Further, when the temperature of the refrigerant exiting the evaporator coils of the evaporator exceeds the first predefined temperature, method 300 may include step 308 of switching the refrigeration circuit from a defrost mode to a cooling mode.

In the cooling mode, method 300 may include the step of circulating the refrigerant from the compressor to the condenser, through the expansion device and the evaporator, and then returning to the compressor as described in detail in the aforementioned paragraphs.

Thus, this invention addresses the drawbacks, and limitations associated with the existing defrosting solutions being implemented in refrigeration systems or TRUs, by providing a simple, efficient, reliable, and cost-effective solution involving the existing evaporator leaving thermistor (EVOT) of the refrigeration system or TRU to monitor/sense the composite temperature of all fluid channels associated with the evaporator coils which is a more responsive indication of bulk coil temperature of the evaporator to terminate or control the defrosting operation, which was not possible in the existing solutions. Moreover, this may help prevent overheating or underheating of evaporator coils, and also enable quick and efficient switching of the evaporator between the defrost mode and the cooling mode, thereby making the refrigeration circuit efficient and reliable.

It should also be noted that the pressure determined by the evaporator outlet pressure sensor can be used to calculate the temperature of the refrigerant which can be used in place of or in addition to the temperature measured by the evaporator leaving thermistor (EVOT).

While the subject disclosure has been described with reference to exemplary embodiments, it will be understood by those skilled in the art that various changes may be made and equivalents may be substituted for elements thereof without departing from the scope of the subject disclosure as defined by the appended claims. Modifications may be made to adopt a particular situation or material to the teachings of the subject disclosure without departing from the scope thereof. Therefore, it is intended that the subject disclosure not be limited to the particular embodiment disclosed, but that the subject disclosure includes all embodiments falling within the scope of the subject disclosure as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A transport refrigeration unit (TRU) comprising:
a sensor (116) positioned at an outlet of an evaporator (108) associated with the TRU, the sensor (116) is operable to sense temperature of a refrigerant exiting evaporator coils of the evaporator (108);
wherein the TRU is configured to terminate defrosting of the evaporator (108) when the sensed temperature exceeds a first predefined temperature indicative of a phase change of ice formed on the evaporator coils.

2. The transport refrigeration unit of claim 1, wherein the TRU comprises:
a compressor (102);
a condenser (104) downstream of the compressor;
an expansion device (106) downstream of the condenser; and
an evaporator (108) downstream of the expansion device,
wherein, in a cooling mode, the TRU is configured to circulate the refrigerant from the compressor (102) to the condenser (104), through the expansion device (106) and the evaporator (108), and then return to the compressor;
optionally, wherein the expansion device (106) is an electronic evaporator expansion valve fluidically configured between the compressor (102) and the evaporator (108).

3. The transport refrigeration unit of any one of claims 1 and 2, wherein in a defrost mode, the TRU is configured to circulate hot refrigerant from the compressor (102) to the evaporator (108) to enable defrosting of the evaporator coils.

4. The transport refrigeration unit of any one of claims 1 to 3, wherein in the defrost mode, the TRU is configured to circulate the hot refrigerant from the compressor (102) to the evaporator (108) through a drain pan heater (110) associated with the evaporator to enable defrosting of the drain pan and the evaporator coils.

5. The transport refrigeration unit of any one of claims 1 to 4, wherein the compressor (102) is fluidically connected to the condenser (104), and the drain pan heater (110) and/or the evaporator coils associated with the evaporator (108) by a three-way valve (112).

6. The transport refrigeration unit of any one of claims 1 to 5, wherein the TRU is switched from the defrost mode to the cooling mode when the temperature of the refrigerant exiting the evaporator coils of the evaporator (108) exceeds the first predefined temperature.

7. A method for controlling defrosting in a refrigeration system, the method comprising the steps of:
monitoring, by a sensor (116) positioned at an outlet of an evaporator (108) associated with the refrigeration system, temperature of a refrigerant exiting evaporator coils of the evaporator (108); and
terminating defrosting of the evaporator (108) when the sensed temperature exceeds a first predefined temperature indicative of a phase change of ice formed on the evaporator coils.

8. The method of claim 7, wherein the method comprises the steps of switching the refrigeration system from a defrost mode to a cooling mode when the temperature of the refrigerant exiting the evaporator coils of the evaporator (108) exceeds the first predefined temperature.

9. The method of any one of claims 7 and 8, wherein in the defrost mode, the method comprises the step of circulating hot refrigerant from a compressor (102) of the refrigeration system to the evaporator (108) to enable defrosting of the evaporator coils.

10. The method of any one of claims 7 to 9, wherein in the defrost mode, the method comprises the step of circulating the hot refrigerant from the compressor (102) to the evaporator (108) through a drain pan heater (110) associated with the evaporator to enable defrosting of the drain pan and the evaporator coils.

11. The method of any one of claims 7 to 10, wherein, in the cooling mode, the method comprises the step of circulating the refrigerant from the compressor (102) to the condenser (104), through an expansion device (106) and the evaporator (108), and then returning to the compressor.

12. A refrigeration circuit (100) with refrigerant based defrost control, the refrigeration circuit comprising:
a compressor (102);
a condenser (104) downstream of the compressor;
an expansion device (106) downstream of the condenser;
an evaporator (108) downstream of the expansion device; and
a sensor (116) positioned at an outlet of the evaporator and operable to sense temperature of a refrigerant exiting the evaporator coils of the evaporator;
wherein an outlet of the compressor (102) is fluidically connected to the condenser (104), and evaporator coils associated with the evaporator (108), and
wherein the refrigeration circuit is configured to terminate defrosting of the evaporator (108) when the sensed temperature exceeds a first predefined temperature indicative of a phase change of ice formed on the evaporator coils.

13. The refrigeration circuit of claim 12, wherein in a defrost mode, the refrigeration circuit is configured to circulate the hot refrigerant from the compressor (102) to the evaporator (108) through a drain pan heater (110) associated with the evaporator to enable defrosting of the drain pan and the evaporator coils.

14. The refrigeration circuit of any one of claims 12 and 13, wherein the compressor (102) is fluidically connected to the condenser (104), and the drain pan heater (110) and/or the evaporator coils associated with the evaporator by a three-way valve (112).

15. The refrigeration circuit of any one of claims 12 to 14, wherein the refrigeration circuit comprises an electric heater in thermal contact with the evaporator (108), wherein in a defrost mode, the electrical heater is activated to enable defrosting of the evaporator coils and a drain pan associated with the evaporator; and/or
wherein the refrigeration circuit comprises an economizer (114) fluidically configured between the compressor (102), the evaporator (108), and the condenser (104), and wherein the expansion device (106) is an electronic evaporator expansion valve.
